# EUROPÄISCHE PATENTANMELDUNG

(11) **EP 4 575 347 A1**
(43) Veröffentlichungstag der Anmeldung: **25.06.2025**
(21) Anmeldenummer: 24214549.8
(22) Anmeldetag: 21.11.2024
(51) Int. Cl.: F24T 10/30, F24T 10/20, F24T 10/00, F01K 25/10, F03G 4/00

(54) **SYSTEM UND VERFAHREN ZUR NUTZUNG GEOTHERMISCHER ENERGIE**

(30) Priorität: 21.12.2023 DE 102023136275
(71) Anmelder: MAN Energy Solutions SE, 86153 Augsburg (DE)
(72) Erfinder: Mischo, Bob, 8125 Zollikerberg (CH); Köhlert, Sebastian, 8048 Zürich (CH); Schönenberger, Markus, 5620 Bremgarten (CH)

(57) **Zusammenfassung**

System (10) zur Nutzung geothermischer Energie, mit einer Einspeicherungsvorrichtung (13), die eingerichtet ist, Kohlenstoffdioxid, das auf einem ersten Temperaturniveau und einem ersten Dichteniveau vorliegt, in ein unterirdisches Reservoir (11) einzuspeichern, mit einer Ausspeicherungsvorrichtung (14), die eingerichtet ist, Kohlenstoffdioxid, das auf einem zweiten Temperaturniveau und einem zweiten Dichteniveau vorliegt, aus dem unterirdisches Reservoir auszuspeichern, wobei das zweite Temperaturniveau größer als das erste Temperaturniveau und das zweite Dichteniveau kleiner als das erste Dichteniveau ist, mit einer einen ersten Wärmeübertrager (17), einen Kompressor (18), einen zweiten Wärmeübertrager (19) und einen Expander (26) oder eine Drossel aufweisenden Wärmepumpe (16), wobei der erste Wärmeübertrager (17) eingerichtet ist, thermische Energie des Kohlenstoffdioxids stromabwärts der Ausspeicherungsvorrichtung (14) und stromaufwärts der Einspeicherungsvorrichtung auf ein Prozessmedium der Wärmepumpe (16) zu übertragen, wobei der Kompressor (18) eingerichtet ist, das Prozessmedium stromabwärts des ersten Wärmeübertragers (17) zu verdichten, wobei der zweite Wärmeübertrager (19) eingerichtet ist, thermische Energie des verdichteten Prozessmediums auf einen Verbraucher zu übertragen, und wobei der Expander (26) oder die Drossel eingerichtet ist, das Prozessmedium stromabwärts des zweiten Wärmeübertragers (19) zu entspannen, und mit einer Einbringeinrichtung (21), die eingerichtet ist, Kohlenstoffdioxid einer Kohlenstoffdioxidquelle (22) stromabwärts der Ausspeicherungsvorrichtung (14) und stromaufwärts der Wärmepumpe (16) in das System (10) einzubringen.

## Beschreibung

Die Erfindung betrifft ein System und ein Verfahren zur Nutzung geothermischer Energie.

EP 2 406 562 B1 offenbart ein System zur Nutzung geothermischer Energie. Das dort offenbarte System zur Nutzung geothermischer Energie umfasst eine Einspeichervorrichtung, die eingerichtet ist, Kohlenstoffdioxid, das auf einem ersten Temperaturniveau vorliegt, in ein unterirdisches Reservoir einzuspeichern. Ferner verfügt das dort offenbarte System zur Nutzung geothermischer Energie über eine Ausspeichervorrichtung, die eingerichtet ist, Kohlenstoffdioxid, das auf einem zweiten Temperaturniveau vorliegt, aus dem unterirdischen Reservoir auszuspeichern, wobei das zweite Temperaturniveau größer als das erste Temperaturniveau ist. Ferner verfügt dieses System zur Nutzung geothermischer Energie über einen Expander, einen Kompressor sowie über Kühleinrichtungen. Im Expander kann dasjenige Kohlenstoffdioxid, das mithilfe der Ausspeichervorrichtung aus dem Reservoir ausgespeichert wird, entspannt werden, um so aus thermischer Energie mechanische Energie zu erzeugen, die in einem Generator in elektrische Energie gewandelt wird. Der Kompressor dient der Verdichtung des im Expander entspannten Kohlenstoffdioxids sowie der Verdichtung von Kohlenstoffdioxid, welches eine Kohlenstoffdioxidquelle bereitstellt. Die Kühleinrichtungen dienen der Kühlung des Kohlenstoffdioxids, um gekühltes Kohlenstoffdioxid wieder im Reservoir einzuspeichern.

US 8 316 955 B2, US 8 833 475 B2 und US 8 991 510 B2 offenbarten weiteren Stand der Technik zu Systemen zur Nutzung geothermischer Energie.

WO 2021 / 013 465 A1 offenbart ein System zur Wandlung von thermischer Energie in mechanische Energie, welches vorzugsweise in einem geothermischen Kraftwerk genutzt werden kann. Das dort offenbarte System verfügt über eine Pumpe zum Befördern eines Strömungsmediums, über eine Anordnung zur Umwandlung des Strömungsmediums von einem flüssigen in einen gasförmigen Zustand, über eine Strömungsmaschine zum Umwandeln der thermischen Energie des Strömungsmediums in mechanische Energie, über einen Kondensator zum Kondensieren des gasförmigen Strömungsmediums in einen flüssigen Zustand und über eine Kühlungseinheit zum Abkühlen des flüssigen Strömungsmediums.

Es besteht Bedarf an einem System und einem Verfahren zur Nutzung geothermischer Energie, die gegenüber dem Stand der Technik eine Verbesserung des Wirkungsgrads und/oder eine verbesserte Nutzbarmachung der Wärme ermöglichen.

Hiervon ausgehend liegt der vorliegenden Erfindung die Aufgabe zugrunde, ein neuartiges System und Verfahren zur Nutzung geothermischer Energie zu schaffen. Diese Aufgabe wird durch ein System zur Nutzung geothermischer Energie nach Anspruch 1 und durch ein Verfahren nach Anspruch 6 gelöst.

Das erfindungsgemäße System zur Nutzung geothermischer Energie weist eine Einspeicherungsvorrichtung auf, die eingerichtet ist, Kohlenstoffdioxid, das auf einem ersten Temperaturniveau und einem ersten Dichteniveau vorliegt, in ein unterirdisches Reservoir einzuspeichern.

Das erfindungsgemäße System zur Nutzung geothermischer Energie weist eine Ausspeicherungsvorrichtung auf, die eingerichtet ist, Kohlenstoffdioxid, das auf einem zweiten Temperaturniveau und einem zweiten Dichteniveau vorliegt, aus dem unterirdisches Reservoir auszuspeichern, wobei das zweite Temperaturniveau größer als das erste Temperaturniveau und das zweite Dichteniveau kleiner als das erste Dichteniveau ist.

Das erfindungsgemäße System zur Nutzung geothermischer Energie weist eine Wärmepumpe mit einem ersten Wärmeübertrager, einem Kompressor, einem zweiten Wärmeübertrager und einem Expander oder einer Drossel auf, wobei der erste Wärmeübertrager der Wärmepumpe eingerichtet ist, thermische Energie des Kohlenstoffdioxids stromabwärts der Ausspeicherungsvorrichtung und stromaufwärts der Einspeicherungsvorrichtung auf ein Prozessmedium der Wärmepumpe zu übertragen, wobei der Kompressor der Wärmepumpe eingerichtet ist, das Prozessmedium der Wärmepumpe stromabwärts des ersten Wärmeübertragers und stromaufwärts des zweiten Wärmeübertragers zu verdichten, wobei der zweite Wärmeübertrager der Wärmepumpe eingerichtet ist, thermische Energie des Prozessmediums der Wärmepumpe auf einen Verbraucher zu übertragen, und wobei der Expander oder die Drossel der Wärmepumpe eingerichtet ist, das Prozessmedium der Wärmepumpe stromabwärts des zweiten Wärmeübertragers und stromaufwärts des ersten Wärmeübertragers zu entspannen.

Das erfindungsgemäße System zur Nutzung geothermischer Energie weist eine Einbringeinrichtung auf, die eingerichtet ist, Kohlenstoffdioxid einer Kohlenstoffdioxidquelle stromabwärts der Ausspeicherungsvorrichtung und stromaufwärts der Wärmepumpe in das System zur Nutzung geothermischer Energie einzubringen.

Im Sinne der hier vorliegenden Erfindung weist das System zur Nutzung geothermischer Energie eine Wärmepumpe auf. Über die Wärmepumpe kann thermische Energie des aus dem unterirdischen Reservoir entnommenen Kohlenstoffdioxid effektiv auf das Prozessmedium der Wärmepumpe übertragen werden. Das Prozessmedium der Wärmepumpe kann auf ein Temperaturniveau gebracht werden, welches von mindestens einem Verbraucher zum Beispiel als Heizenergie oder als Prozesswärme genutzt werden kann. Ferner kann die Effizienz des geothermischen Prozesses gesteigert werden, dessen Effizienz von der Temperaturdifferenz und dem Dichteunterschied des Kohlenstoffdioxids zwischen der Einspeichervorrichtung und der Ausspeichervorrichtung abhängig ist.

Vorzugsweise weist das System zur Nutzung geothermischer Energie eine Turbine auf, die eingerichtet ist, das Kohlenstoffdioxid stromabwärts der Ausspeicherungsvorrichtung und stromaufwärts der Einbringeinrichtung zu entspannen und thermische Energie in mechanische Energie und/oder über einen von der Turbine angetrieben Generator in elektrische Energie zu wandeln. Durch die Einbindung der Turbine in das System zur Nutzung geothermischer Energie kann die geothermische Energie nicht nur im Bereich der Wärmepumpe von einem Verbraucher zum Beispiel als Heizenergie oder Prozesswärme genutzt werden, vielmehr kann die geothermische Energie auch in mechanische Energie und/oder elektrische Energie gewandelt werden. Auch dies dient der Erhöhung der Effizienz und der verbesserten Nutzbarmachung geothermischer Energie.

Vorzugsweise weist das System zur Nutzung geothermischer Energie einen Abscheidebehälter auf, der eingerichtet ist, aus dem Kohlenstoffdioxid stromabwärts der Ausspeicherungsvorrichtung und stromaufwärts der Einbringeinrichtung Flüssigkeit abzuscheiden. Insbesondere ist der Abscheidebehälter zwischen die Ausspeicherungsvorrichtung und die Turbine geschaltet. Über den Abscheidebehälter kann sichergestellt werden, dass aus dem Kohlenstoffdioxid, welches über die Ausspeichervorrichtung aus dem unterirdischen Reservoir ausgespeichert wird, Flüssigkeit abgeschieden wird, um insbesondere in Richtung auf die Turbine ausschließlich gasförmiges oder superkritisches Kohlenstoffdioxid zu fördern. Auch dies dient der Erhöhung der Effizienz des Systems zur Nutzung geothermischer Energie.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: ein Blockschaltbild eines ersten erfindungsgemäßen Systems zur Nutzung geothermischer Energie,
- Fig. 2: ein Blockschaltbild eines zweiten erfindungsgemäßen Systems zur Nutzung geothermischer Energie.

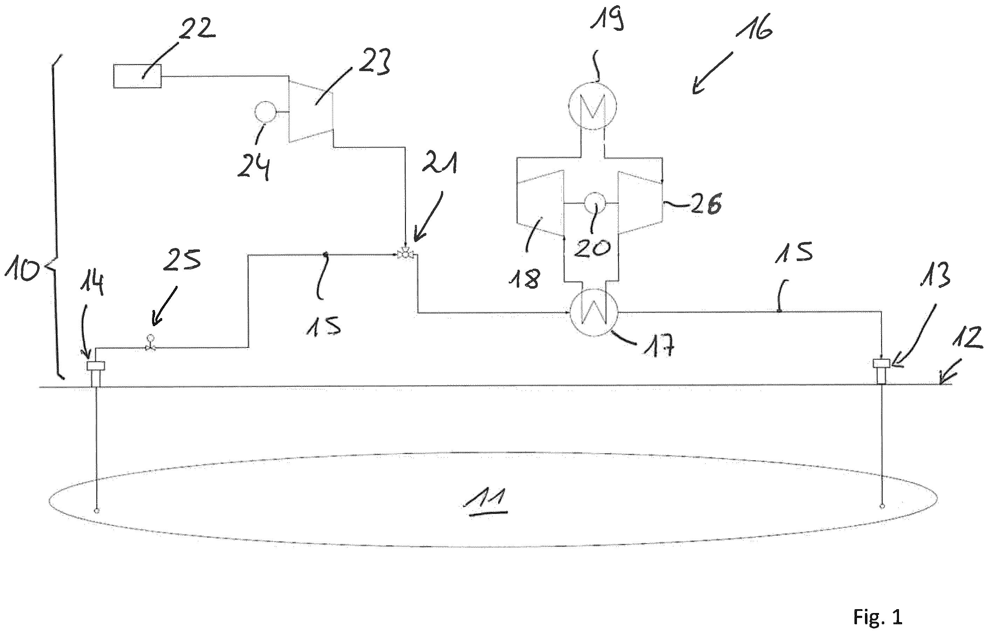

Fig. 1 zeigt stark schematisiert ein System 10 zur Nutzung geothermischer Energie zusammen mit einem unterirdischen Reservoir 11, in welchem Kohlenstoffdioxid gespeichert und durch geothermische Energie erwärmt werden kann. Das unterirdische Reservoir 11 kann zum Beispiel in einer Tiefe von 1 km bis 5 km unterhalb der Erdoberfläche 12 liegen.

Das erfindungsgemäße System 10 zur Nutzung geothermischer Energie verfügt über eine Einspeichervorrichtung 13, die eingerichtet ist, Kohlenstoffdioxid, das auf einem ersten Temperaturniveau und einem ersten Dichteniveau vorliegt, in das unterirdische Reservoir 11 einzuspeichern.

Ferner verfügt das System 10 zur Nutzung geothermischer Energie über eine Ausspeichervorrichtung 14, die eingerichtet ist, Kohlenstoffdioxid, das auf einem zweiten Temperaturniveau und einem zweiten Dichteniveau vorliegt, aus dem unterirdischen Reservoir 11 auszuspeichern. Das zweite Temperaturniveau ist dabei größer als das erste Temperaturniveau. Das über die Ausspeichervorrichtung 14 aus dem unterirdischen Reservoir 11 auszuspeichernde Kohlenstoffdioxid ist demnach wärmer als das über die Einspeichervorrichtung 13 in das unterirdische Reservoir 11 einzuspeichernde Kohlenstoffdioxid. Das zweite Dichteniveau ist kleiner als das erste Dichteniveau. Das im Bereich der Ausspeichervorrichtung 14 auszuspeichernde Kohlenstoffdioxid weist demnach eine kleinere Dichte auf als das im Bereich der Einspeichervorrichtung 13 in das unterirdische Reservoir 11 einzuspeichernde Kohlenstoffdioxid.

Das aus dem unterirdischen Reservoir 11 über die Ausspeichervorrichtung 14 ausgespeicherte Kohlenstoffdioxid ist über eine Rohrleitung 15 in Richtung auf die Einspeichervorrichtung 13 leitbar, wobei das System 10 zur Nutzung geothermischer Energie über eine Wärmepumpe 16 verfügt. Die Wärmepumpe 16 weist einen ersten Wärmeübertrager 17, einen Kompressor 18, einen zweiten Wärmeübertrager 19 und in Fig. 1 einen Expander 26 auf. Anstelle eines Expanders 26 kann auch eine Drossel zum Einsatz kommen. Der erste Wärmeübertrager 17 der Wärmepumpe 16 ist in die Rohrleitung 15 für das Kohlenstoffdioxid integriert, wobei der erste Wärmeübertrager 17 der Wärmepumpe 16 eingerichtet ist, das Kohlenstoffdioxid stromabwärts der Ausspeichervorrichtung 14 und stromaufwärts der Einspeichervorrichtung 13 zu kühlen und hierbei thermische Energie des ausgespeicherten Kohlenstoffdioxids auf ein Prozessmedium der Wärmepumpe 16 zu übertragen. Der Kompressor 18 der Wärmepumpe 16 ist eingerichtet, das im Bereich des ersten Wärmeübertragers 17 erwärmte Prozessmedium der Wärmepumpe 16 zu verdichten, nämlich stromabwärts des ersten Wärmeübertragers 17 und stromaufwärts des zweiten Wärmeübertragers 19, wobei der zweite Wärmeübertrager 19 der Wärmepumpe 16 eingerichtet ist, thermische Energie des Prozessmediums der Wärmepumpe 16 auf einen Verbraucher zu übertragen, der die Wärme insbesondere als Prozesswärme oder Heizwärme nutzen kann. Im Bereich des Expanders 26 wird das Prozessmedium der Wärmepumpe 16 entspannt, um als entspanntes Prozessmedium nachfolgend wieder dem ersten Wärmeübertrager 17 der Wärmepumpe 16 bereitgestellt zu werden.

Zum Antreiben des Verdichters 18 der Wärmepumpe 16 dient ein Motor 20. Dann, wenn, wie in Fig. 1 gezeigt, die Wärmepumpe 16 den Expander 19 aufweist, wird bei der Entspannung des Prozessmediums der Wärmepumpe 16 im Expander 19 mechanische Energie gewonnen, die zum Antreiben des Verdichters 18 genutzt werden kann. In diesem Fall kann dann der Motor 20 entlastet werden. Ist anstelle des Expanders 19 lediglich eine Drossel vorhanden, so muss sämtliche Antriebsleistung zum Antreiben des Verdichters 18 der Wärmepumpe 16 vom Motor 20 bereitgestellt werden.

Das System 10 zur Nutzung geothermischer Energie weist ferner eine Einbringeinrichtung 21 auf, die eingerichtet ist, Kohlenstoffdioxid einer Kohlenstoffdioxidquelle 22 stromabwärts der Ausspeichervorrichtung 14 und stromaufwärts der Wärmepumpe 16 in das System 10 zur Nutzung geothermischer Energie einzubringen, und zwar in die Rohrleitung 15. Dabei ist zwischen die Einbringeinrichtung 21 und die Kohlenstoffdioxidquelle 22 ein Verdichter 23 geschaltet, der von einem Motor 24 antreibbar ist. Über den Verdichter 23 wird das Kohlenstoffdioxid der Kohlenstoffdioxidquelle 22 auf ein Druckniveau verdichtet, welches dem Druckniveau des Kohlenstoffdioxids im Bereich der Rohrleitung 15 stromabwärts der Ausspeichervorrichtung 14 und stromaufwärts der Wärmepumpe 16 entspricht. Ferner zeigt Fig. 1 ein Druckregelventil 25, mithilfe dessen der Druck innerhalb der Rohrleitung 15 unmittelbar stromabwärts der Ausspeichervorrichtung 14 geregelt werden kann.

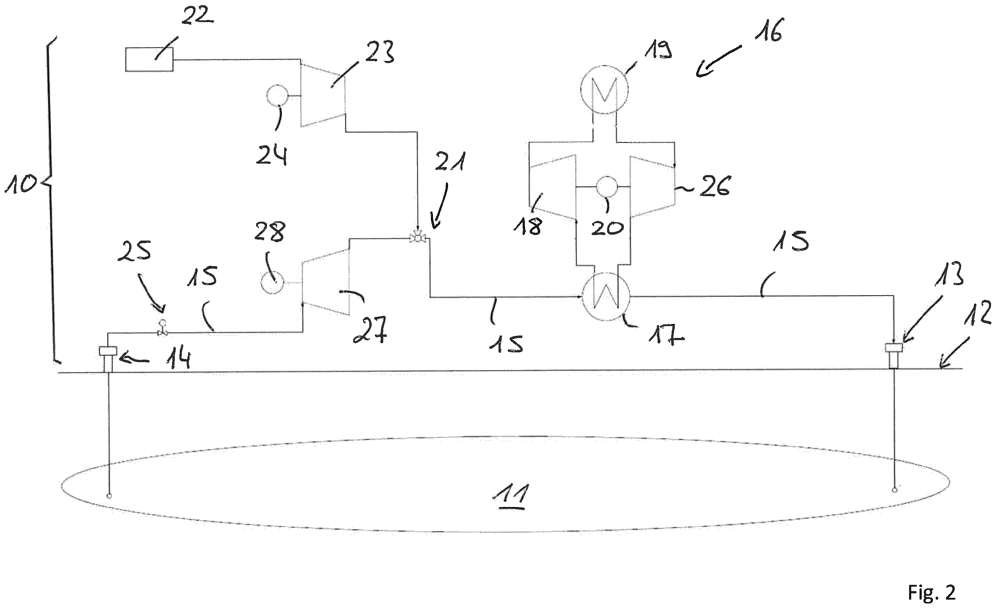

Fig. 2 zeigt eine Weiterbildung des Systems 10 der Fig. 1, wobei für das System 10 zur Nutzung thermischer Energie der Fig. 2 für gleiche Baugruppen gleiche Bezugsziffern verwendet werden wie in Fig. 1. Nachfolgend wird nur auf solche Details eingegangen, durch die sich das Ausführungsbeispiel der Fig. 2 vom Ausführungsbeispiel der Fig. 1 unterscheidet. Hinsichtlich aller übrigen Details stimmt das Ausführungsbeispiel der Fig. 2 mit dem Ausführungsbeispiel der Fig. 1 überein, sodass auf die Ausführungen zum Ausführungsbeispiel der Fig. 1 verwiesen werden kann.

Im Ausführungsbeispiel der Fig. 2 verfügt das System 10 zur Nutzung geothermischer Energie über eine Turbine 27, die eingerichtet ist, das Kohlenstoffdioxid stromabwärts der Ausspeichervorrichtung 14 und stromaufwärts der Einbringeinrichtung 21 zu entspannen und so Enthalpie des Kohlenstoffdioxids in mechanische Energie zu wandeln, um zum Beispiel einen Generator 28 anzutreiben, welcher der Erzeugung elektrischer Energie dient. Der Verdichter 23 verdichtet dann das Kohlenstoffdioxid der Kohlenstoffdioxidquelle 22 auf ein Druckniveau, welches stromabwärts der Turbine 27 herrscht.

Im Ausführungsbeispiel der Fig. 2 kann die geothermische Energie nicht nur im Bereich des zweiten Wärmeübertragers 19 der Wärmepumpe 16 einem Verbraucher zugänglich gemacht werden, vielmehr kann die geothermische Energie im Bereich der Turbine 27 und des Generators 28 zur Erzeugung mechanischer Energie und elektrischer Energie genutzt werden. Die Wandlung der im Bereich der Turbine 27 gewonnenen mechanischen Energie in elektrische Energie ist zwar bevorzugt, jedoch optional.

Es kann vorgesehen sein, dass das System 10 einen Abscheidebehälter aufweist, der in Fig. 1, 2 nicht gezeigt ist. In dem Abscheidebehälter kann aus dem Kohlenstoffdioxid, welches über die Ausspeichervorrichtung 14 aus dem unterirdischen Reservoir 11 ausgespeichert wurde, Flüssigkeit abgeschieden werden. Hierdurch kann die Effizienz und damit der Wirkungsgrad des Systems 10 zur Nutzung geothermischer Energie gesteigert werden. Das Reservoir 11 wird dadurch getrocknet. Ein Vermischen des Kohlenstoffdioxidstroms mit Wasser oder anderen Flüssigkeiten, welches die Effizienz verringern würde, kann vermieden werden. Ein Entziehen von Fremdbestandteilen aus dem Kohlenstoffdioxidstrom dient somit der Effiziensteigerung und der uneingeschränkten Aufrechterhaltung der Funktion.

Die Positionierung des Abscheidebehälters ist abhängig von den einzelnen Komponenten des System 10. Sie ist hauptsächlich abhängig von der Korrosivität und des Aggregatszustandes der Fremdbestandteile im Kohlenstoffdioxidstrom sowie der entsprechenden Korrosionesresistenz der Komponenten und im Falle der Turbine 27 von der Beständigkeit gegenüber Flüssigbestandteilen im Stoffstrom. In der Turbine 27 könnten bei Flüssigbestandteilen im Stoffstrom Kavitationseffekte die Haltbarkeit des Turbine 27 deutlich reduzieren. Dies ist abhängig von der konkreten Auslegung der Turbine 27.

Bei entsprechender Inkompatibilität einzelner oder mehrerer Komponenten innerhalb des System 10 ist eine Platzierung stromaufwärts der entsprechenden Komponente vorzuziehen. Gleichzeitig ist ein Abscheiden direkt vor der Einspeichervorrichtung 13 und nach der Turbine 27 und dem ersten Wärmeübertrager 17 effizienzsteigernd, da dadurch der Enthalpiestrom der Fremdbestandteile in der Turbine 27 und/oder im ersten Wärmeübertrager 17 genutzt werden kann.

Das System 10 zur Nutzung geothermischer Energie kann weiterhin eine zwischen die Wärmepumpe 16, nämlich den ersten Wärmeübertrager 17 derselben, und die Einspeichervorrichtung 13 geschaltete Pumpe für das Kohlenstoffdioxid aufweisen. Eine solche Pumpe ist optional. Abhängig von den Drücken des Kohlenstoffdioxids im Bereich der Einspeichervorrichtung 13 und der Ausspeichervorrichtung 14 sowie dem Druck im Reservoir 11 und der geodätischen Höhe kann auf eine solche Pumpe verzichtet werden.

Die Erfindung betrifft weiterhin ein Verfahren zum Betreiben eines Systems 10 zur Nutzung geothermischer Energie.

Über die Einspeichervorrichtung 13 wird Kohlenstoffdioxid, das auf dem ersten Temperaturniveau und dem ersten Dichteniveau vorliegt, in das unterirdische Reservoir 11 eingespeichert.

Im Bereich der Ausspeichervorrichtung 14 wird das Kohlenstoffdioxid auf dem zweiten Temperaturniveau und dem zweiten Dichteniveau aus dem unterirdischen Reservoir 11 ausgespeichert, wobei das im Bereich der Ausspeichervorrichtung 14 vorliegende Kohlenstoffdioxid insbesondere einen superkritischen Aggregatzustand und ggf. teilweise einen gasförmigen Aggregatzustand aufweisen kann.

Über den ersten Wärmeübertrager 17 der Wärmepumpe 16 wird Kohlenstoffdioxid gekühlt und somit erhöht sich die Dichte des Kohlenstoffdioxids.

Die Erfindung erlaubt einen effizienten Betrieb und damit eine Verbesserung des Wirkungsgrads eines Systems zur Nutzung geothermischer Energie sowie eine verbesserte Nutzbarmachung der geothermischen Wärme.

### Bezugszeichenliste

- 10: System
- 11: unterirdisches Reservoir
- 12: Erdoberfläche
- 13: Einspeicherungsvorrichtung
- 14: Ausspeicherungsvorrichtung
- 15: Rohrleitung
- 16: Wärmepumpe
- 17: erster Wärmeübertrager
- 18: Kompressor
- 19: zweiter Wärmeübertrager
- 20: Motor
- 21: Einbringeinrichtung
- 22: Kohlenstoffdioxidquelle
- 23: Verdichter
- 24: Motor
- 25: Druckregelventil
- 26: Expander
- 27: Turbine
- 28: Generator

## Patentansprüche

1. System (10) zur Nutzung geothermischer Energie,
mit einer Einspeicherungsvorrichtung (13), die eingerichtet ist, Kohlenstoffdioxid, das auf einem ersten Temperaturniveau und einem ersten Dichteniveau vorliegt, in ein unterirdisches Reservoir (11) einzuspeichern,
mit einer Ausspeicherungsvorrichtung (14), die eingerichtet ist, Kohlenstoffdioxid, das auf einem zweiten Temperaturniveau und einem zweiten Dichteniveau vorliegt, aus dem unterirdisches Reservoir (11) auszuspeichern, wobei das zweite Temperaturniveau größer als das erste Temperaturniveau und das zweite Dichteniveau kleiner als das erste Dichteniveau ist,
mit einer einen ersten Wärmeübertrager (17), einen Kompressor (18), einen zweiten Wärmeübertrager (19) und einen Expander (26) oder eine Drossel aufweisenden Wärmepumpe (16), wobei der erste Wärmeübertrager (17) der Wärmepumpe (16) eingerichtet ist, thermische Energie des Kohlenstoffdioxids stromabwärts der Ausspeicherungsvorrichtung (14) und stromaufwärts der Einspeicherungsvorrichtung (13) auf ein Prozessmedium der Wärmepumpe (16) zu übertragen, wobei der Kompressor (18) der Wärmepumpe (16) eingerichtet ist, das Prozessmedium der Wärmepumpe (16) stromabwärts des ersten Wärmeübertragers (17) und stromaufwärts des zweiten Wärmeübertragers (19) zu verdichten, wobei der zweite Wärmeübertrager (19) der Wärmepumpe (16) eingerichtet ist, thermische Energie des Prozessmediums der Wärmepumpe (16) auf einen Verbraucher zu übertragen, und wobei der Expander (26) oder die Drossel der Wärmepumpe (16) eingerichtet ist, das Prozessmedium der Wärmepumpe (16) stromabwärts des zweiten Wärmeübertragers (19) und stromaufwärts des ersten Wärmeübertragers (17) zu entspannen,
mit einer Einbringeinrichtung (21), die eingerichtet ist, Kohlenstoffdioxid einer Kohlenstoffdioxidquelle (22) stromabwärts der Ausspeicherungsvorrichtung (14) und stromaufwärts der Wärmepumpe (16) in das System (10) zur Nutzung geothermischer Energie einzubringen.

2. System (10) nach Anspruch 1, **gekennzeichnet durch** eine Turbine (27), die eingerichtet ist, das Kohlenstoffdioxid stromabwärts der Ausspeicherungsvorrichtung (14) und stromaufwärts der Einbringeinrichtung (21) zu entspannen und thermische Energie in mechanische Energie und/oder über einen von der Turbine angetrieben Generator (28) in elektrische Energie zu wandeln.

3. System (10) nach Anspruch 1 oder 2, **gekennzeichnet durch** einen Abscheidebehälter, der eingerichtet ist, aus dem Kohlenstoffdioxid stromabwärts der Ausspeicherungsvorrichtung (14) und stromaufwärts der Einbringeinrichtung (21) Flüssigkeit abzuscheiden.

4. System (10) nach Anspruch 2 und 3, **dadurch gekennzeichnet, dass** der Abscheidebehälter zwischen die Ausspeicherungsvorrichtung (14) und die Turbine (27) geschaltet ist.

5. System (10) nach einem der Ansprüche 1 bis 4, **gekennzeichnet durch** eine zwischen die Wärmepumpe (16) und die Einspeicherungsvorrichtung (13) geschaltete Pumpe für das Kohlenstoffdioxid.

6. Verfahren zum Betreiben eines Systems (10) nach einem der Ansprüche 1 bis 5, mit folgenden Schritten:
über die Einspeicherungsvorrichtung (13) wird gasförmiges und/oder flüssiges Kohlenstoffdioxid in das unterirdische Reservoir eingespeichert,
über die Ausspeicherungsvorrichtung (14) wird superkritisches Kohlenstoffdioxid aus dem unterirdischem Reservoir ausgespeichert,
über den ersten Wärmeübertrager (17) der Wärmepumpe (16) wird superkritisches und/oder gasförmiges Kohlenstoffdioxid gekühlt.
